# EUROPÄISCHE PATENTSCHRIFT

(11) **EP 0 930 466 B1**
(45) Veröffentlichungstag und Bekanntmachung des Hinweises auf die Patenterteilung: **23.04.2003**
(21) Anmeldenummer: 99100052.2
(22) Anmeldetag: 05.01.1999
(51) Int. Cl.: F24C 7/04

(54) **Zusatz-Heizeinrichtung**
Auxiliary heater
Dispositif de chauffage additionnel

(30) Priorität: 14.01.1998 DE 19801082
(43) Veröffentlichungstag der Anmeldung: 21.07.1999
(73) Patentinhaber: Schott Glas, 55122 Mainz (DE); CARL-ZEISS-STIFTUNG trading as Schott Glas, 55122 Mainz (DE)
(72) Erfinder: Lammel, Michael, 52066 Aachen (DE); Kratz, Helmut, 52080 Aachen (DE); Nieraad, Thomas, 55257 Budenheim (DE); Wiegand, Dirk, 65719 Hofheim/Ts. (DE); Gabelmann, Torsten, 65199 Wiesbaden (DE); Zimmermann, Heike, 55126 Mainz-Finthen (DE)
(74) Vertreter: Fuchs Mehler Weiss & Fritzsche

(56) Entgegenhaltungen:
- EP-A- 0 514 716
- US-A- 3 062 945

## Beschreibung

Die Erfindung betrifft eine Zusatz-Heizeinrichtung für den Hausbereich, insbesondere für die sogenannten Naßzellen (Bad/Toilette).

Derartige Zusatz-Heizeinrichtungen sind von den unterschiedlichen Herstellern auf dem Markt, typischerweise in Form von über Kopf angeordneten Heizstrahlern mit einem Reflektor und darin angeordneten stabförmigen Infrarotstrahlern, von beheizten Spiegeln, von plattenförmigen, elektrischen Flächenheizungen, von Konvektoren mit und ohne Gebläse, usw..

Diese Zusatz-Heizeinrichtungen werden typischerweise an verschiedenen Orten im Raum angebracht und müssen daher getrennt elektrisch installiert werden, was insbesondere bei einer nachträglichen Anbringung der entsprechenden Geräte umfangreiche Installationsarbeiten hinsichtlich der Leitungsverlegung im Mauerwerk notwendig macht.

Im Produktionsbereich der Zusatz-Heizeinrichtungen hat sich zudem ein herstellerübergreifender Produktstandard entwickelt. Dies führt zu einer Marktsituation mit überwiegend optisch und technisch gleichwertigen Produkten der unterschiedlichen Hersteller und für den Endkunden kaum noch herstellerdifferenzierenden technischen Produktfeatures.

Eine äußere Produktvarianz ist praktisch nur durch äußere Detailgestaltungen an den Einrichtungen gegeben.

Es wird daher bei den bekannten Produkten im wesentlichen an traditionellen Produktkonzepten und -strukturen festgehalten. Zur Produkt- und Herstellerdifferenzierung stehen daher keine innovativen abgrenzenden Gestaltungs- und Oberflächenlösungen zur Verfügung.

Eine Zusatzheizung gem. Oberbegriff von Anspruch 1 ist aus der US-A-3 062 945 bekannt.

Der Erfindung liegt die Aufgabe zugrunde, die eingangs bezeichnete Zusatz-Heizeinrichtung so auszubilden, daß bei einer Vielzahl von Funktionen dennoch eine raumsparende Lösung mit geringem Installationsaufwand gegeben ist, mit einem neuen Materialkonzept, das innovative technische Gestaltungsansätze und Produktkonzepte ermöglicht.

Die Lösung dieser Aufgabe gelingt gemäß der Erfindung mit
- einem mit dem Glas-Formteil verbundenen Glaskeramik-Formteil, dem mindestens eine Wärmestrahlungsquelle zugeordnet ist.

Durch den innovativen Einsatz der flächigen Formteile aus Glas und/oder Glaskeramik sowie durch neue gestalterische Konzepte können neue technische Produktlösungen sowie technische Gestaltungsansätze realisiert werden, völlig abgesehen von den neuen Design-Möglichkeiten.

Durch die Vereinigung verschiedener Funktionen in der Zusatz-Heizeinrichtung ist eine bessere Integration der Heizkörper in das Wohnumfeld möglich, zumal elektrische Leitungen zentral bzw. zusammengefaßt verlegt werden können.

Die neue Produktkonzeption ermöglicht auch mit Vorteil spezielle Lösungen für individuelle Anwendungsbereiche, zumal Glas- und Glaskeramikscheiben in verschiedenen Zuschnitten und gebogenen Formen hergestellt werden können.

Das neuartige Materialkonzept ermöglicht zudem durch seine unverwechselbare Eigenart ein herstellerdifferenzierendes Produktfeature.

Weiterhin sind mit Vorteil Nutzungserweiterungen durch Accessoirefunktionen
- Handtuchhalter
- Garderobenhalter
- Spiegel
möglich.

Durch die erfindungsgemäße Kombination einer Glaskeramikscheibe mit einer Glasscheibe entsteht ein Systemaufbau, der verschiedenste Anwendungen im Bereich Zusatz-Heizen ermöglicht.

Mit besonderem Vorteil ermöglicht die Erfindung dabei die Konstruktion einer Zusatz-Heizeinrichtung mit einer Kombination aus Konvektions- und Strahlungsheizelementen auf der Basis von Glas- und Glaskeramik-Formteilen.

Je nach dem, welches Teil mit einer bestimmten Funktion dem Glas-Formteil zugeordnet ist, sind verschiedene Ausführungsformen der Zusatz-Heizeinrichtung für den Hausbereich möglich. Bei einem ersten Gerät in Form einer Strahler/Heizungs-Kombination ist das Glasformteil großflächig rechteckig als vertikal längsgestreckte Heizplatte ausgebildet, mit einem Hauptabschnitt, dem elektrisch betreibbare Heizelemente zugeordnet sind, und mit einem betrieblich oberen kleineren Nebenabschnitt, der mindestens eine Ausnehmung zur Aufnahme des Glaskeramik-Formteiles mit der dahinter angeordneten Wärmestrahlungsquelle besitzt, wobei das Glaskeramik-Formteil vorzugsweise eingefärbt ist.

Dabei ist gemäß einer Ausgestaltung der Erfindung die Ausnehmung in dem Nebenabschnitt rechteckig, und in entsprechender Weise ist die Wärmestrahlungsquelle entsprechend rechteckig ausgebildet.

Bei einer zweiten Ausführungsform der erfindungsgemäßen Zusatz-Heizeinrichtung in Form einer Strahler-Heizspiegelkombination ist das Glas-Formteil großflächig rechteckig entsprechend typischen Spiegelabmessungen ausgestaltet, mit einer Spiegelschicht versehen, wobei ihm elektrisch betreibbare Heizelemente zugeordnet sind, und wobei das Glaskeramik-Formteil rechteckig ausgebildet ist und mit einer Längsseite mit der betrieblich oberen Seite des Glas-Formteiles abgewinkelt nach vorn verbunden ist und zwei betrieblich nebeneinander liegende kreisrunde Wärmestrahlungsquellen besitzt.

Gemäß einer weiteren Ausgestaltung sind die Heizelemente für beide vorgenannten Kombinationen als mäanderförmige Widerstandsleiterbahnen bzw. Widerstandsschichten unmittelbar auf der Rückseite des Glas-Formteiles aufgebracht.

Bei einer dritten Ausführungsform der erfindungsgemäßen Zusatz-Heizeinrichtung in Form einer Strahler/Leuchten-Kombination ist das Glas-Formteil als schmales Rechteck, mit den Schmalseiten betrieblich vertikal verlaufend, ausgebildet, dem Leuchtmittel zugeordnet sind, wobei das vorzugsweise eingefärbte Glaskeramik-Formteil entsprechend als schmales Rechteck ausgebildet ist und ihm zwei, betrieblich quer nebeneinander liegende kreisförmige Wärmestrahlungsquellen zugeordnet sind.

Bei allen Ausführungsformen sind gemäß einer weiteren Ausgestaltung der Erfindung die Glaskeramik-Formteile mit dem jeweiligen Glas-Formteil verklebt, vorzugsweise mit einem Kleber auf Silikonbasis.

Die Oberflächen der Formteile, insbesondere der Glas-Formteile können bedruckt, und/oder sandgestrahlt, und/oder beschichtet sein. Durch eine sandbestrahlte Glas-Oberfläche läßt sich diese beispielsweise als Streuscheibe ausbilden, was gerade für die Ausführungsform in Form einer Strahler/Leuchten-Kombination von Vorteil ist.

Gemäß einer Weiterbildung der Erfindung besteht das Glaskeramik-Formteil aus einer eingefärbten Glaskeramik mit einer extrem hohen thermischen Belastbarkeit (> 200° C) bei ausgezeichneter Formstabilität, das zudem sehr hohe Temperaturdifferenzen (> 100° C) aushalten kann. Die Glaskeramik erlaubt die Ausbildung des Wärmestrahlers als Sicherheits-Wärmestrahler.

Die Glas-Formteile bestehen vorzugsweise aus thermisch vorgespanntem Kalk-Natron-Glas.

Weitere Ausgestaltungen und Vorteile der Erfindung ergeben sich anhand von drei in den Zeichnungen dargestellten Ausführungsbeispielen.

Es zeigen:

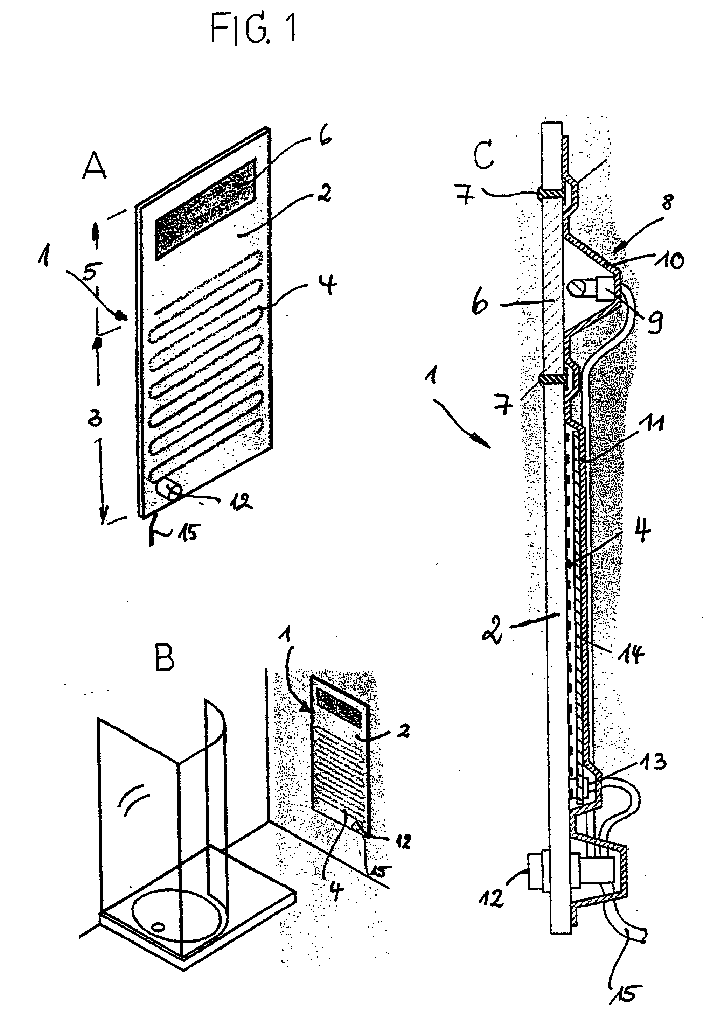

- Fig. 1: eine erste Ausführungsform der erfindungsgemäßen Zusatz-Heizeinrichtung, ausgebildet als Strahler/Heizungskombination, mit einer perspektivischen Draufsicht im Figurenteil A, einer Unterbringungsmöglichkeit im Bad gemäß der Ansicht B und in einer Längsschnittdarstellung gemäß der Ansicht C,

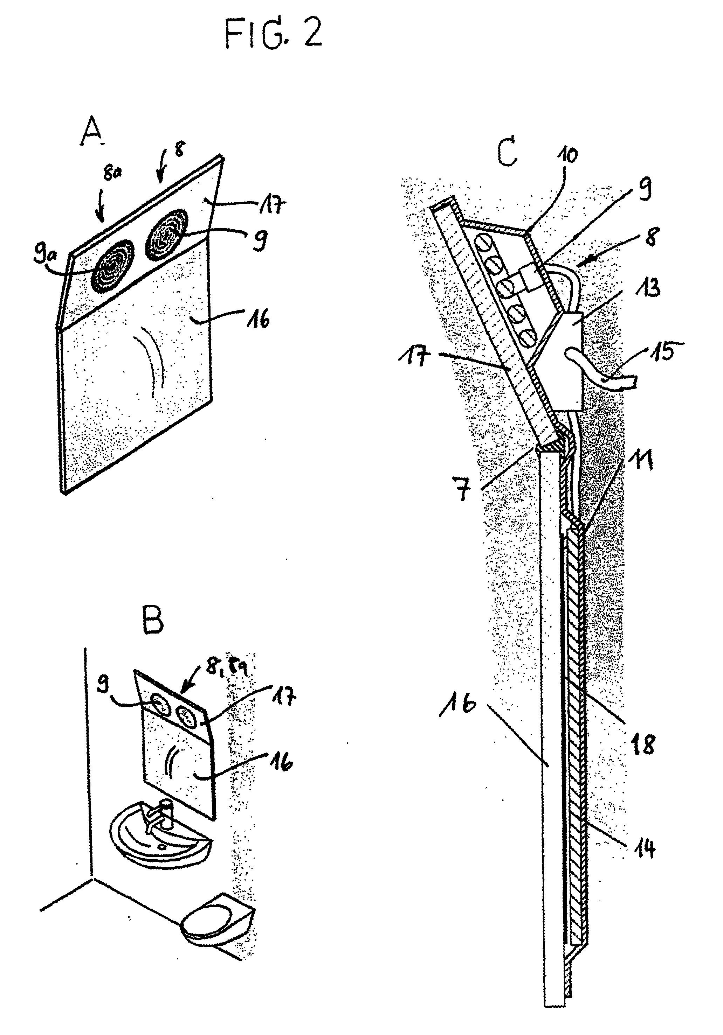

- Fig. 2: eine zweite Ausführungsform der erfindungsgemäßen Zusatz-Heizeinrichtung, ausgebildet als Strahler/Heizspiegelkombination, mit einer perspektivischen Draufsicht in der Ansicht A, einer Möglichkeit zur Unterbringung im Bad gemäß der Ansicht B und in einer Längsschnitt-Darstellung gemäß dem Figurenteil C, und

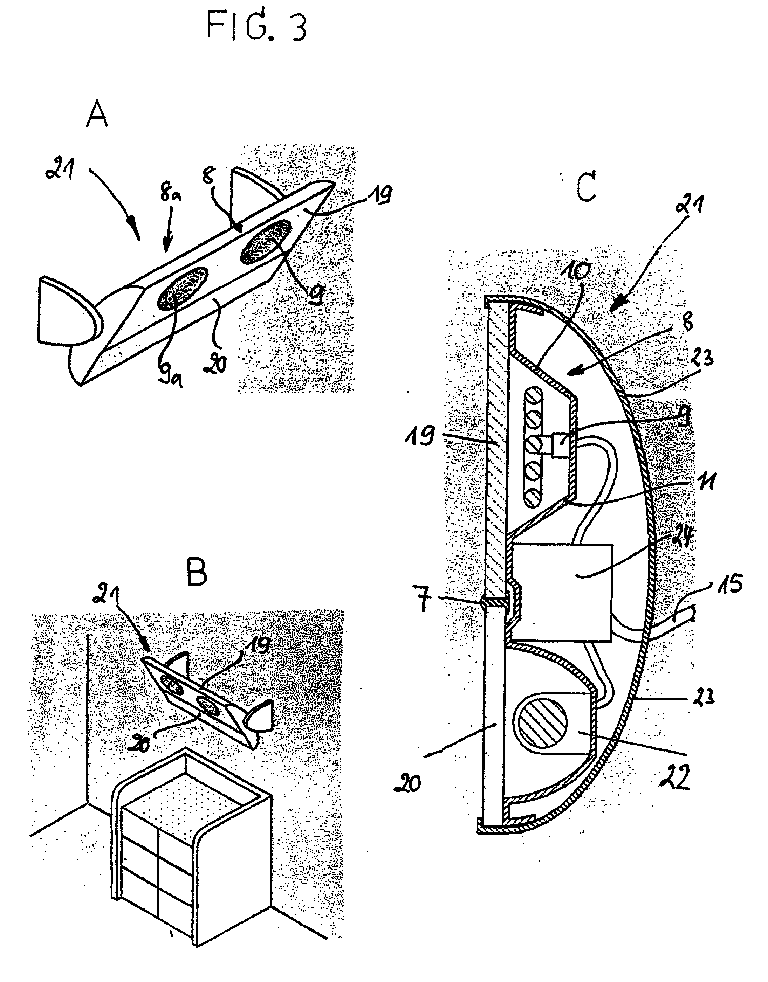

- Fig. 3: eine dritte Ausführungsform der erfindungsgemäßen Zusatz-Heizeinrichtung, ausgebildet als Strahler/Leuchtenkombination, ebenfalls mit einer perspektivischen Ansicht im Figurenteil A, einer Unterbringungsmöglichkeit in einem Wickelraum gemäß dem Figurenteil B und einer Schnittdarstellung gemäß der Ansicht C.

Die Figur 1 zeigt in drei verschiedenen Ansichten A, B, C eine erste Ausführungsform einer Zusatz-Heizeinrichtung in Form einer Strahler/Heizungs-Kombination 1, wie sie gemäß der Ansicht B insbesondere im Badbereich Anwendung findet.

Diese Kombination 1 besteht aus einem großflächigen plattenartigen Glas-Formteil 2 aus thermisch beanspruchbarem Glas, welches in einem Hauptabschnitt 3 mäanderförmig ausgebildete Widerstandsleiterbahnen 4 besitzt, die unmittelbar mit bekannten Methoden (Bedrucken, Beschichten, usw.) auf die Rückseite der Glasscheibe 2 aufgebracht sind.

Als Glasmaterial für die Glasplatte 2 findet vorzugsweise ein thermisch vorgespanntes Kalk-Natron-Glas Anwendung.

Vorzugsweise besitzt die Glasplatte 2 frontseitig eine gestaltete Oberfläche, z.B. durch Bedrucken, Beschichten, durch eine mechanische Behandlung wie Sandstrahlen, usw..

In einem oberen Abschnitt 5 besitzt die Glasplatte 2 eine rechteckige Ausnehmung, in der ein entsprechend gestaltetes rechteckiges eingefärbtes Glaskeramik-Formteil 6 untergebracht ist.

Das Glaskeramik-Formteil 6 ist in der Ausnehmung der Glasplatte 2 dichtend mit dieser verklebt, mit einer Kleberraupe 7 (Ansicht C), die auch einen Dehnungsausgleich aufgrund der unterschiedlichen thermischen Beanspruchung erlaubt. Um dies zu gewährleisten wird vorzugsweise ein Kleber auf Silikonbasis verwendet.

Rückseitig ist dem eingefärbten Glaskeramik-Formteil 6 ein Wärmestrahler 8 zugeordnet, bestehend aus einer Heizwendel 9 und einem Reflektor 10, der durch einen Abschnitt einer Hinterwand 11 aus Blech gebildet ist, die vorzugsweise mit den Glas-Formteilen verklebt ist, die zur Aufhängung der Strahler/Heizungskombination dient, und die einen Montageraum, insbesondere für einen Thermostaten 12 und einen Transformator 13, vorgibt. Zwischen dieser Hinterwand 11 und den Leiterbahnen 4 ist ein plattenförmiger Isolator 14 angeordnet, der verhindert, daß die metallische Hinterwand mit spannungsführenden Teilen in Berührung kommt.

Über einen Netzanschluß 15 sind die Widerstandsleiterbahnen 4 und die Heizwendel 9 mit elektrischer Energie beaufschlagbar.

Die großflächige Heizung mit den Widerstandsleiterbahnen 4 auf dem Glas-Formteil 2 ermöglicht eine Grundtemperatur-Heizung, überwiegend durch Wärmekonvektion, wogegen der Wärmestrahler 8 eine kurzfristige Zusatzheizung ermöglicht.

Die Heizwendel 9 des Wärmestrahlers 8 kann entsprechend der Konfiguration des eingefärbten Glaskeramik-Formteiles 6 rechteckig ausgebildet sein. Es können aber auch mehrere nebeneinander angeordnete kreisrunde Heizwendel vorgesehen sein, wie auch anstelle einer rechteckigen Ausnehmung, beispielsweise zwei oder drei kreisrunde Ausnehmungen, in denen entsprechende kreisrunde Glaskeramik-Formteile aufgenommen sind, vorgesehen sein können.

Die Fig. 2 zeigt in drei verschiedenen Ansichten eine zweite Ausführungsform einer Zusatz-Heizeinrichtung in Form einer Strahler/Heizspiegel-Kombination, wie sie gemäß der Ansicht B insbesondere im Badbereich Anwendung findet. Diese Kombination besteht aus einem großflächigen, plattenartigen Glas-Formteil 16 aus thermisch beanspruchbarem Glas, das mit bekannten Methoden verspiegelt ist und auf der rückseitig eine Heizbeschichtung 18 aufgebracht ist. Als Glasmaterial für die Glasplatte 16 findet vorzugsweise ein thermisch vorgespanntes Kalk-Natron-Glas Anwendung. Die Heizbeschichtung 18 ermöglicht die Ausbildung des Spiegels als beschlagfreier Spiegel, wie es gerade im Badbereich erwünscht ist, da durch den Wasserdampf beim Duschen beispielsweise der Spiegel oft beschlägt.

Mit dem Glas-Formteil 16 ist ein eingefärbtes Glaskeramik-Formteil 17 verbunden, derart, daß das Glaskeramik-Formteil 17 etwas nach vorne abgewinkelt ist, wie insbesondere die Ansicht C zeigt.

Das eingefärbte Glaskeramik-Formteil 17 ist vorzugsweise mit dem Glas-Formteil 16 mittels einer Kleberraupe 7 (Ansicht C) verklebt, die auch einen Dehnungsausgleich aufgrund der unterschiedlichen thermischen Beanspruchung erlaubt. Um dies zu gewährleisten, wird vorzugsweise ein Kleber auf Silikonbasis verwendet.

Rückseitig sind dem eingefärbten Glaskeramik-Formteil 17 zwei Wärmestrahler 8 und 8 a zugeordnet, bestehend jeweils aus einer kreisrunden Heizwendel 9 und einem Reflektor 10, der durch einen Abschnitt einer Hinterwand 11 aus Blech gebildet ist, die vorzugsweise mit den Glas-Glaskeramik-Formteilen verklebt ist, die zur Aufhängung der Strahler/Antibeschlagsspiegel-Kombination dient und die einen Montageraum für einen Transformator 13 und andere nicht dargestellte Teile vorgibt.

Zwischen der Hinterwand 11 und der Heizbeschichtung 18 befindet sich ein plattenförmiger Isolator 14, der verhindert, daß die metallische Hinterwand mit spannungsführenden Teilen in Berührung kommt.

Über einen Netzanschluß 15 sind sowohl die Heizbeschichtung 18 als auch die Heizwendel 9, 9 a mit elektrischer Energie beaufschlagbar.

Wie bereits erwähnt, ermöglicht die Heizbeschichtung 18 die Ausbildung des Spiegels als Antibeschlagspiegel, wogegen, analog der Fig. 1, die Wärmestrahler 8, 8 a eine kurzfristige Zusatzheizung ermöglichen.

Anstelle der in Fig. 2 nebeneinander angeordneten kreisrunden Heizwendel 9, 9 a kann auch eine einzige rechteckige Heizwendel vorgesehen sein.

Die Fig. 3 zeigt in drei verschiedenen Ansichten A bis C eine dritte Ausführungsform einer Zusatz-Heizeinrichtung in Form einer Strahler/Leuchten-Kombination 21, wie sie vorzugsweise gemäß der Ansicht B in einem Wickelraum Anwendung findet. Diese Kombination besteht aus einem großflächigen plattenartigen Glas-Formteil 20 aus thermisch beanspruchbarem Glas, welches mit bekannten Methoden mattiert ausgebildet ist, damit dieses Glas-Formteil 20 als Streuscheibe wirkt.

Als Glasmaterial für die Glasplatte 20 findet vorzugsweise ein thermisch vorgespanntes Kalk-Natron-Glas Anwendung. Dem Glas-Formteil 20 sind rückseitig Leuchtmittel 22 zugeordnet, beispielsweise ausgebildet als Niedervolt-Halogenlampen.

Die Strahler/Leuchten-Kombination 21 besitzt weiterhin ein eingefärbtes Glaskeramik-Formteil 19, welches mittels einer Kleberraupe 7 der bereits besprochenen Art mit dem Glas-Formteile 20 verbunden ist.

Rückseitig sind dem eingefärbten Glaskeramik-Formteil 19 zwei Wärmestrahler 8, 8 a zugeordnet, bestehend jeweils aus einer kreisrunden Heizwendel 9, 9 a und einem Reflektor 10, der durch einen Abschnitt einer Hinterwand 11 aus Blech gebildet ist, die vorzugsweise mit den Glas- und Glaskeramik-Formteilen 19, 20 verklebt ist. Rückseitig ist die Strahler/Leuchten-Kombination 21 durch ein Blechgehäuse 23 abgeschlossen, die eine Aufhängevorrichtung für die Strahler/Leuchtenkombination aufweist und die einen Montageraum für die zum Betrieb der Leuchten 22 notwendigen Installationsteile 24 vorgibt.

Über einen Netzanschluß 15 sind sowohl die Strahler-Heizelemente 9 als auch die Leuchten 22 mit elektrischer Energie beaufschlagbar.

Die Wärmestrahler 8, 8 a erlauben, wie im Beispiel der Fig. 2, eine kurzfristige Zusatzheizung bei beleuchteter Arbeitsfläche.

Anstelle der zwei nebeneinander angeordneten kreisrunden Heizwendel 9, 9 a kann auch eine rechteckig ausgebildete die Fläche des Glaskeramik-Formteiles 19 ausfüllende Strahlungs-Heizwendel vorgesehen sein.

## Patentansprüche

1. Zusatz-Heizeinrichtung für den Hausbereich, mit
- einem flächigen, plattenartigen Glasformteil (2; 16; 20) aus thermisch beanspruchbarem Glas, dem Teile mit unterschiedlichen Funktionen zuordenbar sind, **gekennzeichnet**
- **durch** ein mit dem Glas-Formteil verbundenes Glaskeramik-Formteil (6; 17; 19), dem mindestens eine Wärmestrahlungsquelle (8, 8 a) zugeordnet ist.

2. Zusatz-Heizeinrichtung nach Anspruch 1, **dadurch gekennzeichnet, daß** das Glas-Formteil (2) großflächig rechteckig als vertikal längsgestreckte Heizplatte ausgebildet ist, mit einem Hauptabschnitt (3), dem elektrisch betreibbare Heizelemente (4) zugeordnet sind, und mit einem betrieblich oberen, kleineren Nebenabschnitt (5), der mindestens eine Ausnehmung zur Aufnahme des Glaskeramik-Formteiles (6) mit der dahinter angeordneten Wärmestrahlungsquelle (8) besitzt.

3. Zusatz-Heizeinrichtung nach Anspruch 2, **dadurch gekennzeichnet, daß** die Ausnehmung in dem Nebenabschnitt (5) rechteckig ist, und die Wärmestrahlungsquelle (8) entsprechend rechteckig ausgebildet ist.

4. Zusatz-Heizeinrichtung nach Anspruch 1, **dadurch gekennzeichnet, daß** das Glas-Formteil (16) großflächig eben entsprechend typischen Spiegelabmessungen ausgestaltet und mit einer Spiegelschicht versehen ist, dem elektrisch betreibbare Heizelemente (18) zugeordnet sind, und daß das Glaskeramik-Formteil (17) rechteckig ausgebildet ist, mit einer Längsseite mit der betrieblich oberen Seite des Glas-Formteiles (16), abgewinkelt nach vorne, verbunden ist, und zwei betrieblich nebeneinander liegende kreisrunde Wärmestrahlungsquellen (8, 8 a; 9, 9a) besitzt.

5. Zusatz-Heizeinrichtung nach Anspruch 2 mit Anspruch 3, oder Anspruch 4, **dadurch gekennzeichnet, daß** die Heizelemente als mäanderförmige Widerstandsleiterbahnen (4) oder als Widerstandsschicht (18) unmittelbar auf der Rückseite des Glas-Formteiles (2, 16) aufgebracht sind.

6. Zusatz-Heizeinrichtung nach Anspruch 1, **dadurch gekennzeichnet, daß** das Glas-Formteil (20) als schmales Rechteck, mit den Schmalseiten betrieblich vertikal verlaufend, ausgebildet ist, dem Leuchtmittel (22) zugeordnet sind, und daß das Glaskeramik-Formteil (19) entsprechend als schmales Rechteck ausgebildet ist und ihm zwei, betrieblich quer nebeneinander liegende kreisförmige Wärmestrahlungsquellen (8, 8a; 9, 9 a) zugeordnet sind, wobei beide Formteile an ihren Längsseiten miteinander verbunden sind.

7. Zusatz-Heizeinrichtung nach einem der Ansprüche 1 bis 6, **dadurch gekennzeichnet, daß** das Glaskeramik-Formteil (6; 17; 19) mit dem Glas-Formteil (2; 16; 20) verklebt ist, vorzugsweise mit einem Kleber auf Silikonbasis.

8. Zusatz-Heizeinrichtung nach einem der Ansprüche 1 bis 7, **dadurch gekennzeichnet, daß** die Oberflächen von Formteilen, insbesondere der Glas-Formteile (2; 16; 20) bedruckt und/oder sandgestrahlt und/oder beschichtet sind.

9. Zusatz-Heizeinrichtung nach einem der Ansprüche 1 bis 8, **dadurch gekennzeichnet, daß** das Glaskeramik-Formteil aus einem eingefärbten Glaskeramikmaterial besteht.

10. Zusatz-Heizeinrichtung nach einem der Ansprüche 1 bis 9, **dadurch gekennzeichnet, daß** die Glas-Formteile (2; 16; 20) aus thermisch vorgespanntem Kalk-Natron-Glas gebildet sind.

## Claims

1. Auxiliary heater for the domestic sector, having
- an areal, plate-like, glass shaped part (2; 16; 20) which is made from glass which can withstand thermal loads and which can be assigned parts with different functions, **characterized**
- **by** a glass-ceramic shaped part (6; 17; 19) which is joined to the glass shaped part and is assigned at least one thermal radiation source (8, 8a).

2. Auxiliary heater according to Claim 1, **characterized in that** the glass shaped part (2) is of large-area rectangular design, as a vertically elongate heater plate, having a main section (3), which is assigned electrically operable heating elements (4), and having an operationally upper, smaller secondary section (5), which has at least one recess for holding the glass-ceramic shaped part (6) with the thermal radiation source (8) arranged behind it.

3. Auxiliary heater according to Claim 2, **characterized in that** the recess in the secondary section (5) is rectangular, and the thermal radiation source (8) is of correspondingly rectangular design.

4. Auxiliary heater according to Claim 1, **characterized in that** the glass shaped part (16) is of large-area, planar design, corresponding to typical mirror dimensions, and is provided with a mirror layer, the glass shaped part being assigned electrically operable heating elements (18), and **in that** the glass-ceramic shaped part (17) is of rectangular design, is connected by means of a longitudinal side to the operationally upper side of the glass shaped part (16), angled off forwards, and has two circular thermal radiation sources (8, 8a; 9, 9a) which lie next to one another in the operational position.

5. Auxiliary heater according to Claim 2 in combination with Claim 3, or Claim 4, **characterized in that** the heating elements are applied, as meandering resistor tracks (4) or as a resistor layer (18), directly to the rear side of the glass shaped part (2, 16).

6. Auxiliary heater according to Claim 1, **characterized in that** the glass shaped part (20) is designed as a narrow rectangle, with the narrow sides running vertically in the operational position, which is assigned illumination means (22), and **in that** the glass-ceramic shaped part (19) is correspondingly designed as a narrow rectangle and is assigned two circular thermal radiation sources (8, 8a; 9, 9a), which lie transversely next to one another in the operational position, the two shaped parts being joined to one another at their longitudinal sides.

7. Auxiliary heater according to one of Claims 1 to 6, **characterized in that** the glass-ceramic shaped part (6; 17; 19) is adhesively bonded to the glass shaped part (2; 16; 20), preferably by means of a silicone-based adhesive.

8. Auxiliary heater according to one of Claims 1 to 7, **characterized in that** the surfaces of shaped parts, in particular of the glass shaped parts (2; 16; 20) are printed and/or sand-blasted and/or coated.

9. Auxiliary heater according to one of Claims 1 to 8, **characterized in that** the glass-ceramic shaped part consists of a coloured glass-ceramic material.

10. Auxiliary heater according to one of Claims 1 to 9, **characterized in that** the glass shaped parts (2; 16; 20) are formed from thermally prestressed soda-lime glass.

## Revendications

1. Dispositif de chauffage additionnel pour la maison, comprenant
- une pièce moulée en verre plate, en forme de plaque (2 ; 16 ; 20) se composant de verre à résistance thermique, auquel on peut associer des pièces ayant diverses fonctions,
**caractérisé par**
- une pièce moulée en vitrocéramique (6 ; 17 ; 19) connectée à la pièce moulée en verre, à laquelle est associée au moins une source de rayonnement thermique (8, 8a).

2. Dispositif de chauffage additionnel selon la revendication 1, **caractérisé en ce que** la pièce moulée en verre (2) est réalisée avec une forme rectangulaire et une grande surface, sous forme de plaque chauffage étendue verticalement dans le sens longitudinal, comprenant une portion principale (3) à laquelle sont associés des éléments chauffants (4) à fonctionnement électrique, et comprenant une portion secondaire (5) plus petite, supérieure, opérationnelle, qui possède au moins un évidement destiné à recevoir la pièce moulée en vitrocéramique (6) avec la source de rayonnement thermique (8) disposée derrière elle.

3. Dispositif de chauffage additionnel selon la revendication 2, **caractérisé en ce que** le logement dans la portion secondaire (5) est rectangulaire et la source de rayonnement thermique (8) est réalisée de manière correspondante avec une forme rectangulaire.

4. Dispositif de chauffage additionnel selon la revendication 1, **caractérisé en ce que** la pièce moulée en verre (16) est configurée avec une grande surface plane correspondant à des dimensions typiques de miroir et est pourvue d'une couche réfléchissante à laquelle sont associés des éléments chauffants (18) à fonctionnement électrique, et **en ce que** la pièce moulée en vitrocéramique (17) est réalisée avec une forme rectangulaire, est connectée par un côté long au côté supérieur opérationnel de la pièce moulée en verre (16) avec un coudage vers l'avant, et possède des sources de rayonnement thermique rondes juxtaposées (8, 8a ; 9. 9a).

5. Dispositif de chauffage additionnel selon la revendication 2 conjointement avec la revendication 3 ou la revendication 4, **caractérisé en ce que** les éléments chauffants sont appliqués sous forme de pistes conductrices résistantes en forme de méandres (4) ou sous forme de couche résistante (18) directement sur l'arrière de la pièce moulée en verre (2, 16).

6. Dispositif de chauffage additionnel selon la revendication 1, **caractérisé en ce que** la pièce moulée en verre (20) est réalisée sous la forme d'un rectangle étroit, avec les petits côtés opérationnels s'étendant verticalement, auquel sont associés des moyens d'éclairage (22) et **en ce que** la pièce moulée en vitrocéramique (19) est réalisée de manière correspondante sous la forme d'un rectangle étroit auquel sont associées deux sources de rayonnement thermique (8, 8a ; 9, 9a) circulaires juxtaposées traversalement de manière opérationnelle, les deux pièces moulées étant connectées l'une à l'autre au niveau de leurs longs côtés.

7. Dispositif de chauffage additionnel selon l'une quelconque des revendications 1 à 6, **caractérisé en ce que** la pièce moulée en vitrocéramique (6; 17; 19) est collée avec la pièce moulée en verre (2; 16; 20), de préférence avec une colle à base de silicone.

8. Dispositif de chauffage additionnel selon l'une quelconque des revendications 1 à 7, **caractérisé en ce que** les surfaces des pièces moulées, en particulier des pièces moulées en verre (2 ; 16 ; 20) sont imprimées et/ou sablées et/ou enduites.

9. Dispositif de chauffage additionnel selon l'une quelconque des revendications 1 à 8, **caractérisé en ce que** la pièce moulée en vitrocéramique se compose d'un matériau en vitrocéramique teinté.

10. Dispositif de chauffage additionnel selon l'une quelconque des revendications 1 à 9, **caractérisé en ce que** les pièces moulées en verre (2; 16; 20) sont formées de verre à base de soude et de chaux précontraint thermiquement.
